(19) **Europäisches Patentamt**
**European Patent Office**
**Office européen des brevets**

(11) **EP 3 403 127 B1**

(12) **EUROPÄISCHE PATENTSCHRIFT**

(45) Veröffentlichungstag und Bekanntmachung des Hinweises auf die Patenterteilung:
**15.02.2023 Patentblatt 2023/07**

(21) Anmeldenummer: **16804795.9**

(22) Anmeldetag: **30.11.2016**

(51) Internationale Patentklassifikation (IPC):
**G02B 26/10** (1985.01)

(52) Gemeinsame Patentklassifikation (CPC):
**G02B 26/101**

(86) Internationale Anmeldenummer:
**PCT/EP2016/079312**

(87) Internationale Veröffentlichungsnummer:
**WO 2017/121537 (20.07.2017 Gazette 2017/29)**

(54) **VORRICHTUNG UND VERFAHREN ZUM ABLENKEN EINES LICHTSTRAHLS ZUM SCANNEN EINES RAUMWINKELBEREICHS**

DEVICE AND METHOD FOR DEFLECTING A LIGHT BEAM IN ORDER TO SCAN A SOLID ANGLE RANGE

DISPOSITIF ET PROCÉDÉ POUR DÉVIER UN FAISCEAU LUMINEUX POUR BALAYER UNE ZONE ANGULAIRE SPATIALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.01.2016 DE 102016200502**

(43) Veröffentlichungstag der Anmeldung:
**21.11.2018 Patentblatt 2018/47**

(73) Patentinhaber: **Robert Bosch GmbH**
**70442 Stuttgart (DE)**

(72) Erfinder:
• **ARTZNER, Johannes**
**72800 Eningen (DE)**
• **GLUECK, Manuel**
**72813 St. Johann (DE)**

(56) Entgegenhaltungen:
DE-A1- 19 812 768     DE-C1- 19 710 714
US-A- 5 187 364     US-A- 6 147 822
US-A1- 2014 159 620

**Beschreibung**

Die vorliegende Erfindung betrifft eine Vorrichtung und ein Verfahren zum Ablenken eines Lichtstrahls, insbesondere eines Laserstrahls, zum Scannen eines Raumwinkelbereichs.

Stand der Technik

Laserscanner werden für eine Vielzahl von Anwendungen eingesetzt, beispielsweise zur Bildprojektion, in Scheinwerfern oder zum Abtasten von Umgebungen von Fahrzeugen. Unter einem Laserscanner ist dabei insbesondere eine Vorrichtung zu verstehen, bei der ein Laserstrahl auf eine Ablenkeinrichtung gelenkt wird und von dieser gemäß einem Stellsignal so gesteuert wird, dass der reflektierte Laserstrahl einen interessierenden Raumwinkelbereich, z.B. eine Leinwand, scannt. Unter einem Scannen (oder "Abscannen") ist ein durchquerendes Abfahren des Raumwinkelbereichs oder der Leinwand zu verstehen, beispielsweise in Zickzackmustern, wobei eine gewünschte Abtastdichte von der jeweiligen Anwendung abhängen kann.

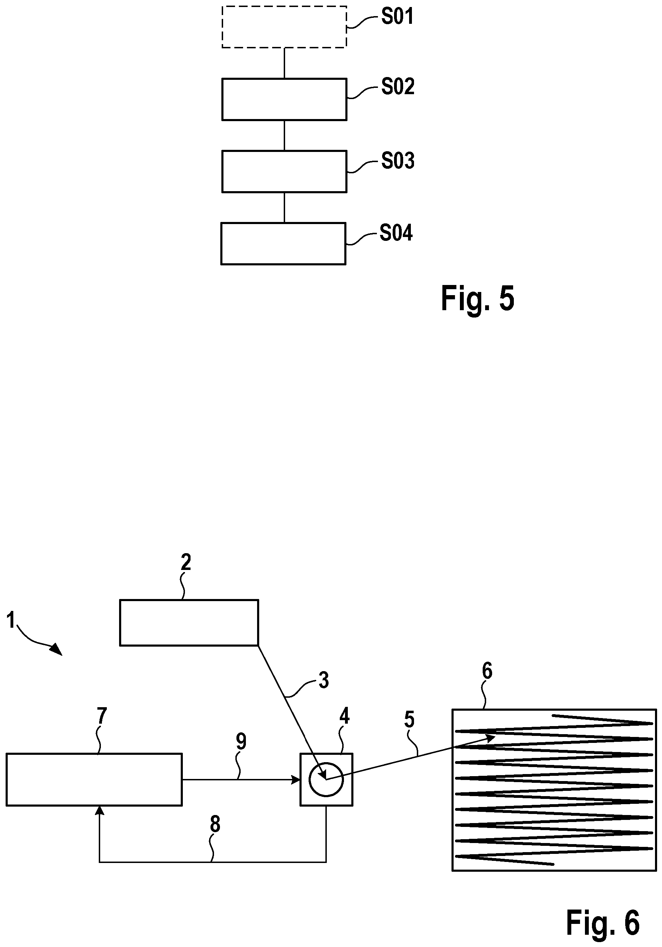

In der US 2010/079 836 A1 ist beispielhaft ein Laserscanner beschrieben, wie er im Folgenden anhand von Fig. 6 näher erläutert wird. Fig. 6 zeigt einen üblichen Laserscanner 1, welcher eine Lichtquelle 2 aufweist, welche dazu ausgelegt ist, einen Laserstrahl 3 zu erzeugen und auf einen Mikrospiegel 4 zu lenken. Der auf den Mikrospiegel 4 auftreffende Laserstrahl 3 wird als abgelenkter Laserstrahl 5 in Richtung einer Leinwand 6 abgelenkt, wobei der Mikrospiegel 4 durch eine Regeleinrichtung 7 gesteuert wird, die Leinwand 6 abzuscannen.

Dazu dreht sich der Mikrospiegel 4 um eine erste Drehachse, welche auch als schnelle Drehachse bezeichenbar ist, so dass die Leinwand 6 in horizontaler Richtung von links nach rechts und wieder zurück periodisch durchfahren wird. Weiterhin dreht sich der Mikrospiegel 4 um eine zweite Drehachse, welche auch als langsame Drehachse bezeichenbar ist, derart, dass der Lichtstrahl 5 periodisch die Leinwand 6 von oben nach unten und wieder zurück durchfährt. In Überlagerung der Bewegungen um die erste und die zweite, das heißt die langsame und die schnelle Drehachse, ergibt sich das in Fig. 6 gezeigte Zickzackmuster. Die Regeleinrichtung 7 empfängt Positionssignale 8, welche eine jeweilige Position der Ablenkeinrichtung 4 indizieren, und passt Steuersignale 9 zum Steuern der Ablenkeinrichtung 4 darauf basierend an.

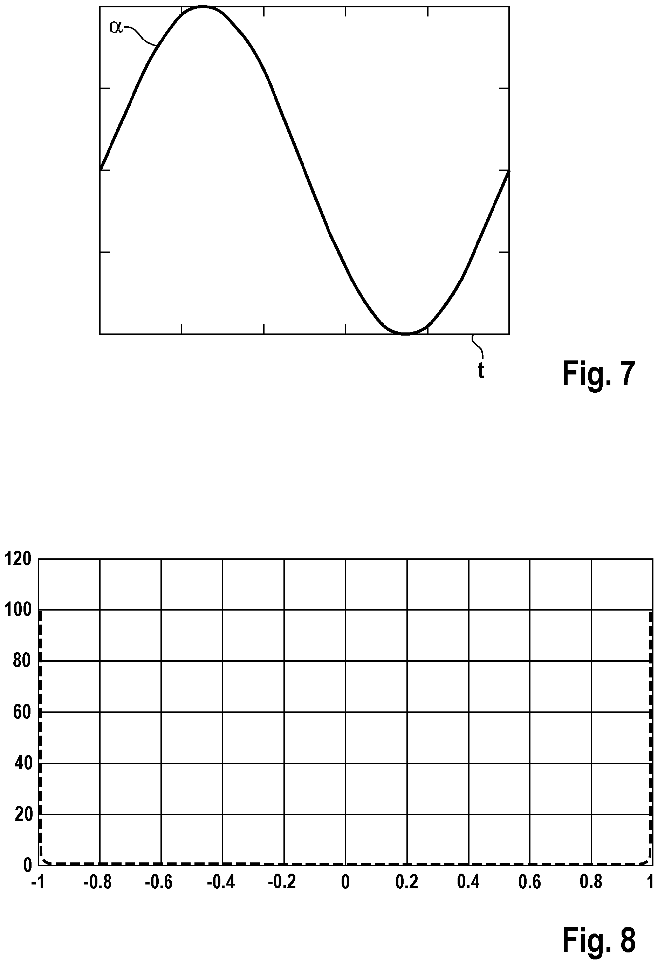

Das Scannen erfolgt üblicherweise in einer periodischen, insbesondere einer sinusförmigen Bewegung, wie beispielsweise in Fig. 7 dargestellt. Fig. 7 zeigt einen Graphen, welcher einen Auslenkungswinkel $\alpha$ eines Mikrospiegels 4 als Funktion der Zeit t innerhalb einer Periodendauer in Form einer Sinusfunktion darstellt. Bei einer Bewegung wie in Fig. 7 gezeigt ergeben sich Maxima einer Aufenthaltswahrscheinlichkeitsdichte für den abgelenkten Lichtstrahl gemäß dem Auslenkungswinkel des Mikrospiegels 4 wie in Fig. 8 gezeigt. Dementsprechend befinden sich Maxima der Aufenthaltswahrscheinlichkeitsdichte bei dem maximalen Auslenkungswinkel in negativer Richtung, $\alpha_{min}$, sowie bei dem maximalen Auslenkungswinkel in positiver Richtung, $\alpha_{max}$.

Weitere Beispiele für Laserscanner sind in der US 5 187 364 A, der DE 198 12 768 A1, der US 2014/159620 A1, der US 6 147 822 A und der DE 197 10 714 C1 offenbart.

Offenbarung der Erfindung

Die vorliegende Erfindung offenbart eine Vorrichtung mit den Merkmalen des Patentanspruchs 1 und ein Verfahren mit den Merkmalen des Patentanspruchs 9.

Bevorzugt ist die Steuereinrichtung derart eingerichtet, dass sie das Steuersignal derart erzeugt, dass das Maximum eine vordefinierte und/oder anpassbare Breite, insbesondere Halbwertsbreite, der Dichte der Aufenthaltswahrscheinlichkeitsdichte aufweist.

Unter dem aktuell bevorzugten Raumwinkel ist derjenige Raumwinkel zu verstehen, in welchen im Verlauf einer Periode des periodischen Scannens der größte Anteil der verfügbaren Lichtleistung, der so genannte Lichtschwerpunkt, gelenkt werden soll. Dies kann beispielsweise ein Raumwinkel sein, in welchem ein interessierendes Objekt angeordnet ist und welcher mit besonders großer Zuverlässigkeit gescannt werden soll. Unter einer Aufenthaltswahrscheinlichkeitsdichte ist eine Funktion zu verstehen, welche eine Aufenthaltswahrscheinlichkeit des Lichtstrahls pro differentiellem Raumwinkel (oder Winkel) angibt, sodass eine Integration der Aufenthaltswahrscheinlichkeitsdichte über den gesamten Raumwinkelbereich (oder Winkelbereich) Eins ergibt.

Unter einem Raumwinkelbereich und einem darin bevorzugten Raumwinkel kann auch ein Ablenkwinkelbereich und ein darin bevorzugter Ablenkwinkel verstanden werden, beispielsweise wenn die Ablenkeinrichtung nur zum Ablenken des Lichtstrahls gemäß einer einzigen Drehachse ausgebildet ist.

Bevorzugt wird das Steuersignal derart erzeugt, dass das Maximum eine vordefinierte und/oder anpassbare Breite, insbesondere Halbwertsbreite, der Dichte der Aufenthaltswahrscheinlichkeitsdichte aufweist.

Vorteile der Erfindung

Die der vorliegenden Erfindung zugrundeliegende Erkenntnis besteht darin, dass bei herkömmlichen Lichtscansystemen die Aufenthaltswahrscheinlichkeitsdichte des zum Scannen abgelenkten Lichtstrahls stets unveränderbar an den Umkehrpunkten bzw. Umkehrzonen, das heißt an den Rändern des zu scannenden Raumwinkelbereichs angeordnet ist, wo jedoch in den wenigsten Fällen die innerhalb des Raumwinkelbereichs am meisten interessierenden Objekte erwartet werden.

Die der vorliegenden Erfindung zugrundeliegende Idee besteht nun darin, dieser Erkenntnis Rechnung zu tragen und eine Vorrichtung und ein Verfahren zum Ablenken eines Lichtstrahls zum Scannen eines Raumwinkelbereichs bereitzustellen, welche es erlauben, das Maximum der Aufenthaltswahrscheinlichkeitsdichte des abgelenkten Lichtstrahls beliebig innerhalb des zu scannenden Raumwinkelbereichs festzulegen und bei Bedarf zu verändern. Dadurch lassen sich Maxima der Lichtverteilung über den zu scannenden Raumwinkelbereich des durch die Vorrichtung, oder gemäß dem Verfahren, abgelenkten Lichts beliebig von den Rändern des zu scannenden Raumwinkelbereichs weg verschieben.

Außerdem ist die Steuereinrichtung dazu ausgelegt, das Stellsignal derart zu erzeugen und/oder anzupassen, dass eine Winkelgeschwindigkeitsfunktion des Mikrospiegels in mindestens einem ersten Abschnitt ihres periodischen Definitionsbereichs einen ersten in der Zeit konstanten Term und einen ersten in der Zeit periodischen Term aufweist oder daraus besteht. Die Winkelgeschwindigkeitsfunktion des Mikrospiegels gibt eine Winkelgeschwindigkeit des Mikrospiegels als Funktion einer Zeit innerhalb einer Periode des periodischen Scannens an. Die Zeit innerhalb der Periode kann als Bruchteil einer Periodendauer T der Periode angegeben werden. Mit anderen Worten gibt die Winkelgeschwindigkeitsfunktion an, welche Winkelgeschwindigkeit (Betrag und Richtung) der Mikrospiegel jeweils bei seiner Bewegung nacheinander von einem Ausgangspunkt (zu einem Zeitpunkt t=0), über seine maximale positive Auslenkung (oder maximale negative Auslenkung) bei einem Zeitpunkt t=T/4, über wiederum den Ausgangspunkt bei einem Zeitpunkt t=T/2, über eine maximale negative Auslenkung (bzw. maximale positive Auslenkung) bei einem Zeitpunkt t=3/4 T, bis hin zurück zu dem Ausgangspunkt bei t=T bzw. wiederum t=0 gemäß der periodischen Bewegung aufweist.

Vorteilhafte Ausführungsformen und Weiterbildungen ergeben sich aus den Unteransprüchen sowie aus der Beschreibung unter Bezugnahme auf die Figuren.

Unter einem in der Zeit periodischen Term soll ein Term verstanden werden, welcher durch eine periodische Funktion, insbesondere eine trigonometrische Funktion, besonders bevorzugt durch eine Sinus- oder Cosinusfunktion, beschreibbar ist, auch wenn innerhalb des jeweiligen Abschnitts des Definitionsbereichs keine vollständige Periode der periodischen Funktion (welche von der Periode des periodischen Scannens des Mikrospiegels verschieden sein kann) durchlaufen wird.

Mit anderen Worten weist eine Auslenkungswinkelfunktion des Mikrospiegels, welche einen Auslenkungswinkel des Mikrospiegels als Funktion der Zeit t innerhalb der Periode des periodischen Scannens angibt, in mindestens dem ersten Abschnitt des periodischen Definitionsbereichs einen in der Zeit linearen Term (dessen Ableitung nach der Zeit den ersten in der Zeit konstanten Term der Winkelgeschwindigkeitsfunktion ergibt) und einen periodischen Term (dessen Ableitung nach der Zeit den ersten in der Zeit periodischen Term der Winkelgeschwindigkeitsfunktion ergibt) auf oder besteht daraus. Dadurch ergibt sich eine vorteilhafte Gestaltung der Aufenthaltswahrscheinlichkeitsdichte des periodisch abgelenkten Lichtstrahls.

Gemäß einer weiteren bevorzugten Weiterbildung ist die Steuereinrichtung weiterhin dazu ausgelegt, das Steuersignal derart zu erzeugen, dass die Winkelgeschwindigkeitsfunktion des Mikrospiegels in einem zweiten Abschnitt ihres periodischen Definitionsbereichs einen zweiten in der Zeit konstanten Term und einen zweiten in der Zeit periodischen Term aufweist oder daraus besteht. Der erste und der zweite Abschnitt sind, wie auch alle weiteren im Folgenden beschriebenen Abschnitte des Definitionsbereich, jeweils disjunkt. Der erste in der Zeit konstante Term unterscheidet ersten Abschnitt des periodischen Definitionsbereichs einen in der Zeit linearen Term (dessen Ableitung nach der Zeit den ersten in der Zeit konstanten Term der Winkelgeschwindigkeitsfunktion ergibt) und einen periodischen Term (dessen Ableitung nach der Zeit den ersten in der Zeit periodischen Term der Winkelgeschwindigkeitsfunktion ergibt) auf oder besteht daraus. Dadurch ergibt sich eine vorteilhafte Gestaltung der Aufenthaltswahrscheinlichkeitsdichte des periodisch abgelenkten Lichtstrahls.

Gemäß einer weiteren bevorzugten Weiterbildung ist die Steuereinrichtung weiterhin dazu ausgelegt, das Steuersignal derart zu erzeugen, dass die Winkelgeschwindigkeitsfunktion des Mikrospiegels in einem zweiten Abschnitt ihres periodischen Definitionsbereichs einen zweiten in der Zeit konstanten Term und einen zweiten in der Zeit periodischen Term aufweist oder daraus besteht. Der erste und der zweite Abschnitt sind, wie auch alle weiteren im Folgenden beschriebenen Abschnitte des Definitionsbereich, jeweils disjunkt. Der erste in der Zeit konstante Term unterscheidet sich vorzugsweise von dem zweiten in der Zeit konstanten Term und der erste in der Zeit periodische Term unterscheidet sich vorzugsweise von dem zweiten in der Zeit periodischen Term, und zwar auch ohne Berücksichtigung der verschiedenen Abschnitte des Definitionsbereichs. Der Definitionsbereich kann durch den ersten und den zweiten Abschnitt vollständig abgedeckt sein, d.h. aus diesen bestehen. An einem etwaigen Übergang zwischen dem ersten und dem zweiten Abschnitt (und/oder umgekehrt) kann die Winkelgeschwindigkeitsfunktion sich sprunghaft ändern.

Gemäß einer weiteren bevorzugten Weiterbildung ist die Winkelgeschwindigkeitsfunktion in dem ersten Abschnitt gleich der mit minus Eins multiplizierten Winkelgeschwindigkeitsfunktion in dem zweiten Abschnitt, wenn das Argument der Winkelgeschwindigkeitsfunktion in dem ersten Abschnitt mit minus Eins multipliziert wird. Mit anderen Worten kann die Winkelgeschwindigkeitsfunktion in dem ersten Abschnitt als Punktspiegelung am Koordinatenursprung der Winkelgeschwindigkeitsfunktion in dem zweiten Abschnitt bezeichnet werden. Somit ergibt sich eine weitere vorteilhafte Gestaltung der Aufenthaltswahrscheinlichkeitsdichte des periodisch abgelenkten Lichtstrahls.

Gemäß einer weiteren bevorzugten Weiterbildung ist an einem ersten Übergang zwischen dem ersten Abschnitt und dem zweiten Abschnitt des periodischen Definitionsbereichs der Winkelgeschwindigkeitsfunktion ein dritter Abschnitt des periodischen Definitionsbereichs definiert und an einem zweiten Übergang zwischen dem zweiten Abschnitt und dem ersten Abschnitt des periodischen Definitionsbereichs ein vierter Abschnitt des periodischen Definitionsbereichs definiert. Die Winkelgeschwindigkeitsfunktion des Mikrospiegels in dem dritten Abschnitt ist eine stetige Funktion und weist bevorzugt einen ersten in der Zeit t linearen Term auf oder, besonders bevorzugt, besteht aus einem Polynom erster Ordnung in der Zeit. Die Winkelgeschwindigkeitsfunktion des Mikrospiegels in dem vierten Abschnitt ist eine stetige Funktion und weist einen zweiten in der Zeit t linearen Term auf oder, besonders bevorzugt, besteht aus einem Polynom erster Ordnung in der Zeit. Dadurch erfolgen die Bewegungen des Mikrospiegels weniger abrupt, was einen schonenderen Betrieb der Vorrichtung ermöglicht.

Gemäß einer weiteren bevorzugten Weiterbildung nimmt die Winkelgeschwindigkeitsfunktion in dem dritten Abschnitt einmal den Wert Null an und/oder nimmt die Winkelgeschwindigkeitsfunktion in dem vierten Abschnitt einmal den Wert Null an. Mit anderen Worten wird der Mikrospiegel im Bereich seiner Umkehrpunkte bei seiner periodischen Bewegung zum periodischen Scannen des Raumwinkelbereichs jeweils gemäß einer Winkelgeschwindigkeitsfunktion mit einem linearen Term, insbesondere bestehend aus einem Polynom erster Ordnung in der Zeit t, gesteuert. Auf diese Weise kann eine besonders schonende Steuerung des Mikrospiegels durchgeführt werden.

Gemäß einer weiteren bevorzugten Weiterbildung indiziert das Steuersignal weiterhin eine Halbwertsbreite eines Peaks der Aufenthaltswahrscheinlichkeitsdichte des periodisch abgelenkten Lichtstrahls um das in dem bevorzugten Raumwinkel angeordnete Maximum. Vorteilhaft ist die Steuereinrichtung dazu ausgelegt, das Stellsignal zum Ausbilden des Peaks der Aufenthaltswahrscheinlichkeitsdichte mit der durch das Steuersignal indizierten Halbwertsbreite anzupassen.

Gemäß einer weiteren bevorzugten Weiterbildung umfasst die Vorrichtung eine Bereitstellungseinrichtung, welche zum Erzeugen des Lichtstrahls nach Maßgabe eines Lichtbereitstellungs-Steuersignals ausgelegt ist. Das Steuersignal indiziert vorteilhaft zusätzlich eine gewünschte Lichtintensität des Lichtstrahls in dem bevorzugten Raumwinkel. Die Steuereinrichtung kann dazu ausgelegt sein, das Lichtbereitstellungs-Steuersignal basierend auf der durch das Steuersignal indizierten Lichtintensität zu erzeugen. Somit kann eine Lichtverteilung in dem Raumwinkelbereich noch präziser an vielgestaltige Anforderungen angepasst werden.

Gemäß einer weiteren bevorzugten Weiterbildung ist die Steuereinrichtung dazu ausgelegt, das Stellsignal derart zu erzeugen, dass der Mikrospiegel zum Ablenken des Lichtstrahls über Grenzen des zu scannenden Raumwinkelbereichs hinweg, insbesondere in einer parabolischen Bewegung, ausgelenkt wird.

Das erfindungsgemäße Verfahren ist insbesondere mit der erfindungsgemäßen Vorrichtung durchführbar und ist daher gemäß allen in Bezug auf die erfindungsgemäße Vorrichtung beschriebenen Modifikationen und Weiterbildungen anpassbar.

Kurze Beschreibung der Zeichnungen

Die vorliegende Erfindung wird nachfolgend anhand der in den schematischen Figuren der Zeichnungen dargestellten Ausführungsbeispiele näher erläutert. Es zeigen:

| | |
|---|---|
| Fig. 1 | ein schematisches Blockdiagramm einer Vorrichtung zum Ablenken eines Lichtstrahls zum Scannen eines Raumwinkelbereichs gemäß einer Ausführungsform der vorliegenden Erfindung; |
| Fig. 2 und Fig. 3 | schematische Graphen zum Erläutern einer möglichen Funktionsweise der Vorrichtung aus Fig. 1; |
| Fig. 4 | einen schematischen Graphen zum Erläutern einer weiteren möglichen Funktionsweise der Vorrichtung aus Fig. 1; |
| Fig. 5 | ein schematisches Flussdiagramm zum Erläutern eines Verfahren zum Ablenken eines Lichtstrahls zum Scannen eines Raumwinkelbereichs gemäß noch einer weiteren Ausführungsform der vorliegenden Erfindung; |
| Fig. 6 | eine schematische Darstellung eines herkömmlichen Laserscanners; und |
| Fig. 7 und Fig. 8 | schematische Graphen zum Erläutern der Funktion des herkömmlichen Laserscanners aus Fig. 6 |

In allen Figuren sind gleiche bzw. funktionsgleiche Elemente und Vorrichtungen - sofern nichts anderes angegeben ist - mit denselben Bezugszeichen versehen. Die Nummerierung von Verfahrensschritten dient der Übersichtlichkeit und soll insbesondere nicht, sofern nichts anderes angegeben ist, eine bestimmte zeitliche Reihenfolge implizieren. Insbesondere können auch mehrere Verfahrensschritte gleichzeitig durchgeführt werden.

Beschreibung der Ausführungsbeispiele

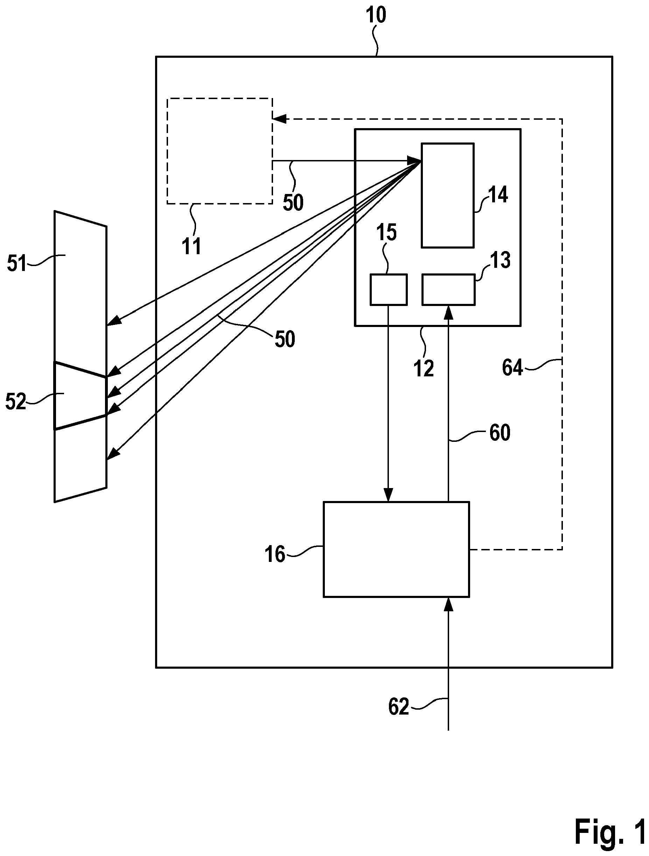

Fig. 1 zeigt ein schematisches Blockdiagramm einer Vorrichtung 10 zum Ablenken eines Lichtstrahls 50 zum Scannen eines Raumwinkelbereichs 51 gemäß einer Ausführungsform der vorliegenden Erfindung.

Die Vorrichtung 10 weist eine Ablenkeinrichtung 12 auf, welche einen Mikrospiegel 14 und einen Aktor 13 umfasst, mittels welchem der Mikrospiegel 14 zum Ablenken eines Lichtstrahls 50 zum periodischen Scannen eines Raumwinkelbereichs 51 ablenkbar ist. Der Aktor 13 kann zum Verstellen des Mikrospiegels 14 in einem quasi statischen oder in einem resonanten Betrieb ausgelegt sein. Das Verstellen des Mikrospiegels 14 kann ein Drehen des Mikrospiegels 14 um eine oder mehrere Drehachsen umfassen. Das Verstellen des Mikrospiegels 14 kann alternativ oder zusätzlich auch ein Verformen des Mikrospiegels 14, insbesondere einer spiegelnden Oberfläche des Mikrospiegels 14, umfassen. Die Ablenkeinrichtung 12 ist dazu ausgelegt, den Lichtstrahl 50 nach Maßgabe eines Stellsignals 60 zum periodischen Scannen des Raumwinkelbereichs 51 mittels des Mikrospiegels 14 abzulenken.

Die Vorrichtung 10 kann eine Bereitstellungseinrichtung 11 aufweisen, welche dazu ausgelegt ist, den Lichtstrahl 50 bereitzustellen und auf die Ablenkeinrichtung 12 zu lenken. Die Bereitstellungseinrichtung 11 kann beispielsweise eine Lichtquelle oder eine Einrichtung zum Einkoppeln eines extern erzeugten Lichtstrahls 50 in die Vorrichtung 10 umfassen oder daraus bestehen. Die Bereitstellungseinrichtung 11 kann dazu beispielsweise eine Anzahl von optischen Elementen umfassen, beispielsweise Linsen, Blenden, Glasfaserleitungen und dergleichen. Alternativ kann durch eine Anordnung der Vorrichtung 10 relativ zu einer externen Lichtquelle auch ein extern erzeugter Lichtstrahl als der Lichtstrahl 50 auf die Ablenkeinrichtung 12 geleitet werden. Der Lichtstrahl 50 ist bevorzugt ein Laserstrahl. Der bereitgestellte Lichtstrahl 50, insbesondere Laserstrahl, trifft auf die Ablenkeinrichtung 12 und wird von dem Mikrospiegel 14 gemäß einer momentanen Lage, das heißt Ausrichtung, oder einer momentanen Verformung, des Mikrospiegels 14 abgelenkt. Der Lichtstrahl 50 wird bevorzugt mit einer über mindestens eine Periode des Scannens zeitlich konstanten Lichtintensität bereitgestellt.

Die Vorrichtung 10 umfasst weiterhin eine Steuereinrichtung 16, welche dazu ausgelegt ist, ein externes oder internes Steuersignal 62 zu empfangen, welches einen aktuell bevorzugten Raumwinkel 52 in dem zu scannenden Raumwinkelbereich 51 indiziert. Der zu scannende Raumwinkelbereich 51 kann insbesondere ein eindimensional, d.h. durch einen Ablenkwinkel als einzigen Parameter, beschreibbarer Ablenkwinkelbereich sein, nämlich wenn beispielsweise der verstellbare Mikrospiegel 14 lediglich um eine einzige Drehachse drehbar ist. Ein externes Steuersignal 62 kann beispielsweise Anforderungen einer weiteren Vorrichtung indizieren, z.B. Anforderungen einer Scheinwerfersteuerung, eines Lidar-Systems oder dergleichen.

Im Folgenden wird aus Gründen der Verständlichkeit bei der Beschreibung zum Teil auf einen zu scannenden Ablenkwinkelbereich als eine Unterform eines zu scannenden Raumwinkelbereichs sowie auf einen aktuell bevorzugten Ablenkwinkel in dem zu scannenden Ablenkwinkelbereich als eine Unterform des aktuell bevorzugten Raumwinkels abgestellt. Es soll verstanden werden, dass die hierin beschriebenen Prinzipien, Modifikationen und auch die beschriebenen Gestaltungsformen der Vorrichtung 10 ebenso zum Scannen eines Raumwinkelbereichs verwendet werden können.

Zum Scannen eines Raumwinkelbereichs kann beispielsweise der abzulenkende Lichtstrahl 50 einen Azimutwinkelbereich und einen Elevationswinkelbereich periodisch scannen, das heißt überstreichen oder abrastern, wobei durch die Überlagerung der Azimutwinkelbewegung und der Elevationswinkelbewegung des abgelenkten Lichtstrahls 50 der zu scannende Raumwinkelbereich 51 gescannt wird. Durch Festlegen eines aktuell bevorzugten Azimut-Ablenkwinkels in dem zu scannenden Azimutwinkelbereich und eines aktuell bevorzugten Elevations-Ablenkwinkels in dem zu scannenden Elevationswinkelbereich kann der aktuell bevorzugte Raumwinkel 52 definiert werden als derjenige Raumwinkel, welcher von dem abgelenkten Lichtstrahl 50 erreicht wird, wenn der Lichtstrahl 50 sowohl in den bevorzugten Azimut-Ablenkwinkel als auch in den bevorzugten Elevations-Ablenkwinkel abgelenkt wird.

Die Steuereinrichtung 16 ist weiterhin dazu ausgelegt, basierend auf dem empfangenen Steuersignal 62 das Stellsignal 60 zu erzeugen. Darunter soll verstanden werden, dass die Steuereinrichtung 16 dazu in der Lage ist, in Echtzeit, kontinuierlich oder regelmäßig, das empfangene Steuersignal 62 zu überprüfen und das erzeugte Stellsignal 60 kontinuierlich an das jeweils aktuell empfangene Steuersignal 62 anzupassen. Somit kann stets mit besonders geringer Verzögerung eine Veränderung des aktuell bevorzugten Raumwinkels 52 unmittelbar umgesetzt werden. Die Steuereinrichtung 16 ist dazu ausgelegt, das Stellsignal 60 derart zu erzeugen bzw. anzupassen, dass ein Maximum einer Aufenthaltswahrscheinlichkeitsdichte des periodisch abgelenkten Lichtstrahls 50 in dem bevorzugten Raumwinkel 52 angeordnet ist. Analog zu der Aufenthaltswahrscheinlichkeitsdichte des periodisch abgelenkten Lichtstrahls 50 kann auch eine Aufenthaltswahrscheinlichkeitsdichte des verstellbaren Mikrospiegels 14 als Funktion von Auslenkungswinkeln des verstellbaren Mikrospiegels 14 innerhalb des Auslenkungswinkelbereichs des Mikrospiegels 14 zwischen einer maximalen positiven Auslenkung und einer maximalen negativen Auslenkung betrachtet werden.

Die Ablenkeinrichtung 12 kann weiterhin einen Detektor 15 umfassen, welcher zum Ermitteln einer Winkelposition, d.h. eines Auslenkungswinkels, und/oder einer Winkelgeschwindigkeit des Mikrospiegels 14 und zum Ausgeben eines darauf basierenden Rückkopplungssignals ausgelegt ist. Das Rückkopplungssignal kann an die Steuereinrichtung 16 übermittelt werden, basierend auf welchem die Steuereinrichtung 16 in einem Regelbetrieb arbeiten kann (closed-loop Betrieb mit Feedback). In diesem Fall kann die Steuereinrichtung 16 auch als Regeleinrichtung bezeichnet werden oder einen Regler enthalten.

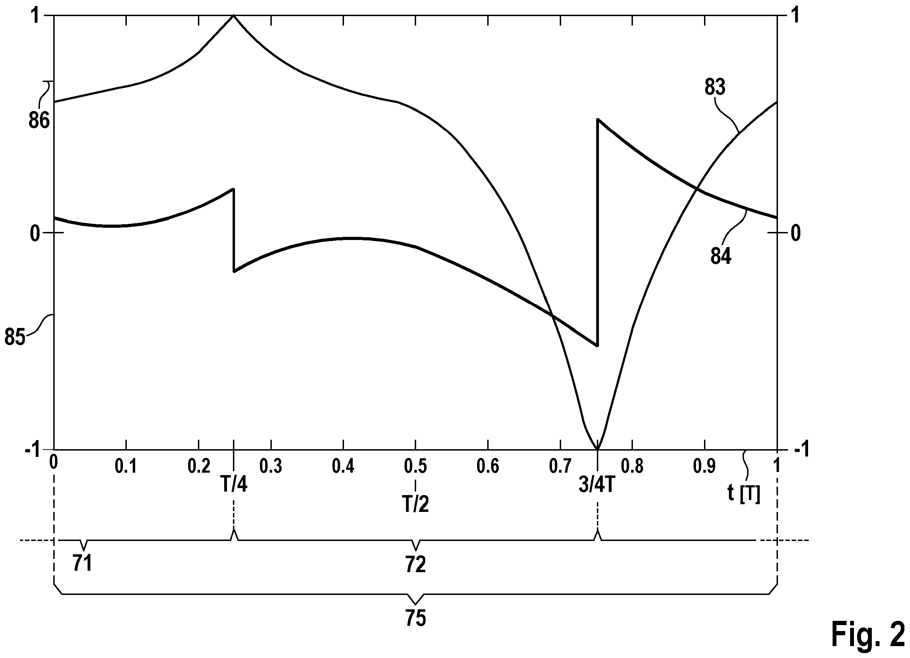

Anhand der nachfolgenden Figuren 2 bis 5 werden verschiedene Varianten erläutert, auf welche Weise die Steuereinrichtung 16 zum Erzeugen des Stellsignals 60 ausgebildet sein kann. Es soll verstanden werden, dass bei Beschreibungen der erfindungsgemäßen Vorrichtung 10 stets auch eine Beschreibung des analogen, erfindungsgemäßen Verfahren mit gegeben ist, welches gemäß allen in Bezug auf die Vorrichtung 10 beschriebenen Weiterbildungen, Modifikationen und Varianten anpassbar ist. Bei der Beschreibung der Figuren 2 bis 5 wird weiterhin vereinfachend davon ausgegangen, dass die Ablenkeinrichtung 12 so ausgebildet ist, dass der Ablenkwinkel des Lichtstrahls 50 dem Auslenkungswinkel des Mikrospiegels 14 entspricht. Selbstverständlich kann die Ablenkeinrichtung 12 auch weitere optische Elemente, z.B. weitere Mikrospiegel etc. aufweisen. Entsprechend kann sich der Ablenkwinkel des Lichtstrahls 50 auch von dem Auslenkungswinkel des Mikrospiegels 14 in festgelegter Weise unterscheiden.

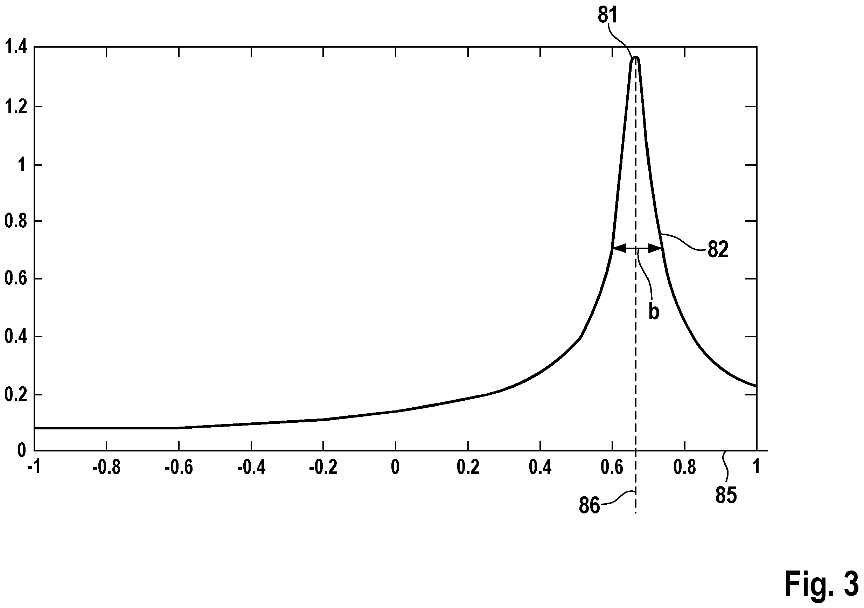

Gemäß einer möglichen Ausführungsform der vorliegenden Erfindung, welche im Folgenden anhand der Figuren 2 und 3 erläutert wird, ist die Regeleinrichtung 16 dazu ausgebildet, das Stellsignal 60 derart zu erzeugen, dass eine Auslenkungswinkelfunktion, mit dem Wert $\alpha(t)$, des Mikrospiegels 14 die folgende Form hat:

$$\alpha(t) = \alpha_{max}\left[a_0\,\frac{t}{\frac{T}{4}} - a_1\sin\left(\frac{2\pi}{T}t - \alpha_0\right)\right],$$

falls die Zeit t in einem ersten Abschnitt 71 des periodischen Definitionsbereichs 75 des periodischen Scannens liegt, wobei der erste Abschnitt 71 zwischen t=-T/4 und t=T/4 (bzw. t=3/4 T und t=T/4) liegt. Hierbei stellt T die Periodendauer des periodischen Scannens dar, $\alpha_{max}$ ist eine (maximale) Auslenkungsamplitude des Mikrospiegels und a0, a1 und $\alpha_0$ sind einstellbare Parameter. Weiterhin ist die Regeleinrichtung 16 dazu ausgebildet, das Stellsignal 60 derart zu erzeugen, dass die Auslenkungswinkelfunktion, mit dem Wert $\alpha(t)$, des Mikrospiegels 14 die folgende Form hat:

$$\alpha(t) = -\alpha_{max}\left[a_0\,\frac{t}{\frac{T}{4}} - a_1\sin\left(\frac{2\pi}{T}t + \alpha_0\right)\right],$$

falls die Zeit t in einem zweiten Abschnitt 72 des periodischen Definitionsbereichs 75 des periodischen Scannens liegt, wobei der zweite Abschnitt 72 zwischen t=T/4 und t=3/4 T liegt. Die Auslenkungswinkelfunktion in dem zweiten Abschnitt 72 geht somit durch Achsenspiegelung an der t=0 - Achse aus der Auslenkungswinkelfunktion in dem ersten Abschnitt 71 hervor.

In dem ersten Abschnitt 71 ist somit eine Winkelgeschwindigkeitsfunktion $\dot{\alpha}(t)$ nach Maßgabe des Stellsignals 60 gegeben durch:

$$\dot{\alpha}(t) = \alpha_{max}\left[a_0\,\frac{1}{\frac{T}{4}} - a_1\,\frac{2\pi}{T}\cos\left(\frac{2\pi}{T}t - \alpha_0\right)\right],$$

und in dem zweiten Abschnitt 72 gegeben durch:

$$\dot{\alpha}(t) = -\alpha_{max}\left[a_0\,\frac{1}{\frac{T}{4}} - a_1\,\frac{2\pi}{T}\cos\left(\frac{2\pi}{T}t + \alpha_0\right)\right].$$

Das heißt, die Winkelgeschwindigkeitsfunktion $\dot{\alpha}(t)$ in dem ersten Abschnitt 71 ist die an dem Koordinatenursprung punktgespiegelte Winkelgeschwindigkeitsfunktion $\dot{\alpha}(t)$ in dem zweiten Abschnitt 72, wobei Punktspiegelung durch f(t) = - f(-t) charakterisiert ist.

Fig. 2 zeigt einen schematischen Graphen, welcher eine normierte Ablenkwinkelfunktion 83 des Lichtstrahls 50, oder, analog, die Auslenkungswinkelfunktion des Mikrospiegels 14, in Abhängigkeit von der Zeit t innerhalb einer Periode des periodischen Scannens sowie eine Winkelgeschwindigkeitsfunktion 84 des Lichtstrahls 50, oder, analog, des Mikrospiegels 14, in Abhängigkeit von der Zeit t innerhalb derselben Periode gemäß den obigen Formeln darstellt. Eine linke vertikale Achse zeigt den normierten Auslenkungswinkel des Mikrospiegels 14, welcher in der vorliegenden Ausführungsform einem normierten Ablenkwinkel 85 des Lichtstrahls 50 gleich ist. In der linken vertikalen Achse ist der aktuell bevorzugte Ablenkwinkel 86 exemplarisch eingezeichnet.

Fig. 3 zeigt einen schematischen Graphen, welcher eine Aufenthaltswahrscheinlichkeitsdichte 82 des Lichtstrahls 50 als Funktion des normierten Ablenkwinkels 85 des Lichtstrahls 50. Wie aus Fig. 3 ersichtlich ist, resultiert das Stellsignal 60 gemäß den o.g. Formeln in einem Maximum 81 der Aufenthaltswahrscheinlichkeitsdichte 82 bei dem aktuell bevorzugten Ablenkwinkel 86, wobei das Maximum 81 von einem Peak mit einer Halbwertsbreite b umgeben ist.

Dazu kann der oben eingeführte Parameter $\alpha_0$ als Arcussinus einer bevorzugten Verschiebung des Maximums 81 von der Mitte des Ablenkwinkelbereichs fort gewählt werden, wobei die Verschiebung zwischen -1 und 1 liegt, entsprechend einer Verschiebung des Maximums 81 zwischen einer maximalen negativen Ablenkung und einer maximalen positiven Ablenkung des Lichtstrahls 50 sowie entsprechend einer maximalen negativen Auslenkung des Mikrospiegels 14 und einer maximalen positiven Auslenkung des Mikrospiegels 14.

Die übrigen Parameter können aus vorgegebenen Randbedingungen bestimmt werden zu:

$$a_1(\gamma, \alpha_0) = \frac{1}{\frac{\pi}{2}\gamma - \cos(\alpha_0)}, \quad a_0(\gamma, \alpha_0) = \frac{\pi}{2}\gamma \frac{1}{\frac{\pi}{2}\gamma - \cos(\alpha_0)}.$$

Hierbei ist y ein Lichtintensitätsparameter des Lichtstrahls 50, welcher mittels der Bereitstellungseinrichtung 11 der Vorrichtung 10 einstellbar sein kann. Der Lichtintensitätsparameter y kann parametrisiert werden als

$$\gamma = \frac{\gamma_0 \cdot \left(\frac{\pi}{2} - \cos(\alpha_0)\right) - (1 - \cos(\alpha_0))}{\frac{\pi}{2} - 1},$$

wobei $\gamma_0$ ein eingestellter oder einstellbarer Lichtintensitätsparameter im Lichtschwerpunkt, d.h. in dem Maximum 81 der Aufenthaltswahrscheinlichkeitsdichte 82 des Lichtstrahls 50 ist. Der Parameter $\gamma_0$ kann mittels der Bereitstellungseinrichtung 11 einstellbar sein. Dazu kann das externe Steuersignal 62 einen aktuell gewünschten Wert für den Parameter $\gamma_0$, indizieren. Die Recheneinrichtung 16 kann dazu ausgelegt sein, basierend auf dem gemäß dem Steuersignal 62 indizierten Wert für den Parameter $\gamma_0$ ein Lichtbereitstellungs-Steuersignal 64 zu erzeugen oder anzupassen und an die Bereitstellungseinrichtung 11 zu übermitteln. Die Bereitstellungseinrichtung 11 kann optional dazu ausgelegt sein, den Lichtstrahl 50 nach Maßgabe des Lichtbereitstellungs-Steuersignals 64 zu erzeugen, um den Lichtintensitätsparameter y des Lichtstrahls 50 entsprechend zu erzeugen oder anzupassen (siehe Fig. 1).

Durch das externe Steuersignal 62 können weitere Werte für einstellbare Parameter indiziert werden, insbesondere für die Frequenz 1/T des periodischen Scannens und für die Auslenkungsamplitude $\alpha_{max}$ des Mikrospiegels 14. Ebenso kann durch das externe Steuersignal 62 eine gewünschte Halbwertsbreite b für den um das Maximum 81 der Aufenthaltswahrscheinlichkeitsdichte 82 ausgebildeten Peak indiziert werden und das Stellsignal 60 zu deren Ausbildung erzeugt oder angepasst werden.

Die Halbswertsbreite b wird durch den Lichtintensitätsparameter y wesentlich beeinflusst. Da die Fläche unter der Aufenthaltswahrscheinlichkeitsdichte aus Fig. 3 dem Wert Eins entspricht, wird indirekt auch die Höhe des Maximums 81 durch die Halbwertsbreite b des Peaks und somit durch den Lichtintensitätsparameter y definiert. Je breiter die Halbwertsbreite b der Aufenthaltswahrscheinlichkeitsdichte ist, desto niedriger ist der Peak. Alternativ oder zusätzlich kann auch ein gewünschter Wert des Maximums 81, welches insbesondere ein absolutes bzw. globales Maximum sein kann, an die Bereitstellungseinrichtung 11 und/oder die Steuereinrichtung 16 übermittelt werden, um das Maximum 81 mit dem gewünschten Wert auszubilden.

In einer Variante kann das Lichtbereitstellungs-Steuersignal 64 derart erzeugt und/oder angepasst werden, dass die Bereitstellungseinrichtung 11 den Lichtstrahl 50 mit zeitlich modulierter Lichtintensität derart erzeugt, dass das Anordnen des Maximums 81 der Aufenthaltswahrscheinlichkeitsdichte 82 in dem bevorzugten Raumwinkel 52 durch eine Kombination des Ablenkens des Lichtstrahls 50 nach Maßgabe des Stellsignals 60 mit dem Erzeugen des Lichtstrahls 50 nach Maßgabe des Lichtbereitstellungs-Steuersignals 64 erfolgt.

Alternativ wird der Lichtstrahl 50 mit einer zeitlich über mindestens eine Periode des Scannens konstanten Lichtintensität bereitgestellt.

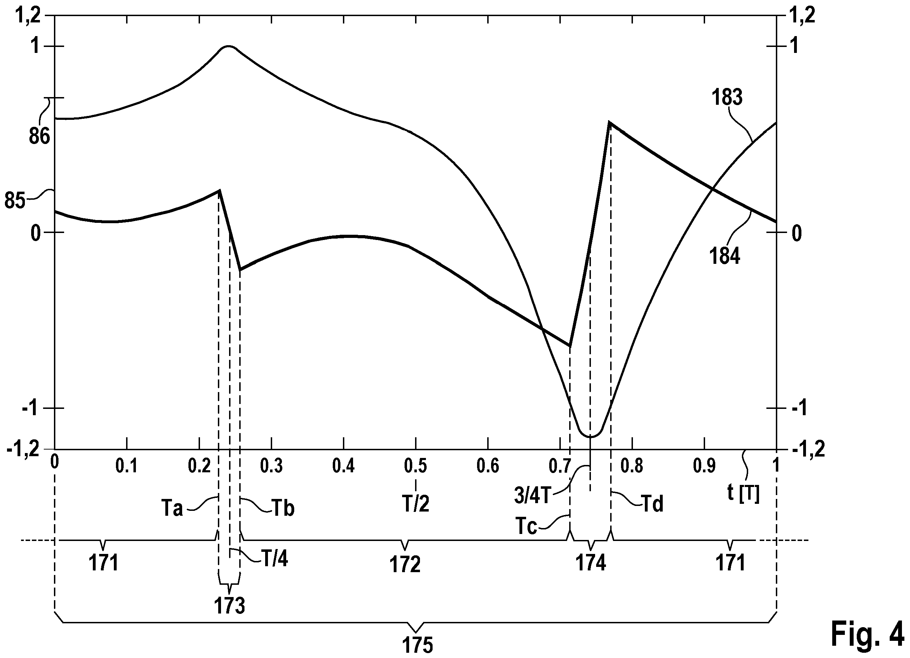

Anhand der nachfolgenden Fig. 4 wird eine weitere mögliche Funktionsweise der Vorrichtung aus Fig. 1 erläutert.

Bei der weiteren möglichen Funktionsweise wird in einem ersten Abschnitt 171 des periodischen Definitionsbereichs 175 eine Winkelgeschwindigkeitsfunktion 184 des Mikrospiegel 14 nach Maßgabe des Stellsignals 60 gegeben durch:

$$\dot{\alpha}(t) = \alpha_{max}\left[a_0\,\frac{1}{\frac{T}{4}} - a_1\,\frac{2\pi}{T}\cos\left(\frac{2\pi}{T}t - \alpha_0\right)\right],$$

wobei sich der erste Abschnitt 171 zwischen einem Zeitpunkt t=Td, welcher zwischen t=3/4 T und t=T (bzw. t=0) liegt, und einem Zeitpunkt t=Ta, welcher zwischen t=0 und t=T/4 liegt, erstreckt. In einem zweiten Abschnitt 172 des periodischen Definitionsbereichs 175, welcher sich zwischen einem Zeitpunkt t=Tb, welcher zwischen t=T/4 und t=T/2 liegt, und einem Zeitpunkt t=Tc, welcher zwischen t=T/2 und t=3/4 T liegt, erstreckt, ist die Winkelgeschwindigkeitsfunktion 184 nach Maßgabe des Stellsignals 60 gegeben durch:

$$\dot{\alpha}(t) = -\alpha_{max}\left[a_0\,\frac{1}{\frac{T}{4}} - a_1\,\frac{2\pi}{T}\cos\left(\frac{2\pi}{T}t + \alpha_0\right)\right],$$

das heißt durch das Negative der Winkelgeschwindigkeitsfunktion 184 in dem ersten Abschnitt 171.

Zwischen dem ersten und dem zweiten Abschnitt 171, 172 ist zwischen den Zeitpunkten Ta und Tb ein dritter Abschnitt 173 und zwischen den Zeitpunkten Tc und Td ein vierter Abschnitt 174 definiert. Die Winkelgeschwindigkeit des Mikrospiegels wird in dem dritten und dem vierten Abschnitt 173, 174 nicht, wie gemäß den Fig. 2 und 3 zwischen dem ersten und dem zweiten Abschnitt 171, 172, sprungförmig, sondern mit linearem Funktionsverlauf verändert und macht insbesondere einen Vorzeichenwechsel durch. Dadurch ergibt sich eine geschmeidige ("smoothe") Ablenkwinkelfunktion 183 des Lichtstrahls 50, wie in Fig. 4 gezeigt. Die Definitionen der Winkelgeschwindigkeitsfunktion 184 in dem dritten Abschnitt 173 und dem vierten Abschnitt 174 ist so gewählt, dass sich insgesamt eine stetige, wenn auch im Allgemeinen nicht stetig differenzierbare, Winkelgeschwindigkeitsfunktion 184 ergibt, wie in Fig. 4 gezeigt. Dabei kann sich eine Auslenkung des Mikrospiegels 14 über Grenzen des zu scannenden Raumwinkelbereichs 51 hinweg ergeben, welche durch die Werte 1 und -1 auf der linken vertikalen Achse in Fig. 4 bezeichnet sind.

Fig. 5 zeigt ein schematisches Flussdiagramm zum Erläutern eines Verfahrens zum Ablenken eines Lichtstrahls 50 zum Scannen eines Raumwinkelbereichs 51 gemäß noch einer weiteren Ausführungsform der vorliegenden Erfindung.

Das erfindungsgemäße Verfahren nach Fig. 5 ist insbesondere mit der erfindungsgemäßen Vorrichtung 10 durchführbar und ist daher insbesondere mit allen in Bezug auf die erfindungsgemäße Vorrichtung 10 beschriebenen Modifikationen und Weiterbildungen, insbesondere der konkreten Ausgestaltung der Winkelgeschwindigkeitsfunktionen 84; 184 anpassbar.

In einem Schritt S02 wird ein Lichtstrahl 50 nach Maßgabe eines Stellsignals 60 zum periodischen Scannen eines Raumwinkelbereichs 51 periodisch abgelenkt. In einem optionalen Schritt S01 kann der dazu verwendete Lichtstrahl 50 durch eine Bereitstellungseinrichtung 11 bereitgestellt, insbesondere erzeugt werden, bevorzugt mit einer über mindestens eine Periode des Scannens zeitlich konstanten Lichtintensität. In einem Schritt S03 wird ein, insbesondere extern erzeugtes, Steuersignal 62, welches einen aktuell bevorzugten Raumwinkel 52 in dem zu scannenden Raumwinkelbereich 51 indiziert, empfangen. In einem Schritt S04 wird das Stellsignal 60 basierend auf dem empfangenen Steuersignal 62 derart erzeugt, dass ein Maximum 81 einer Aufenthaltswahrscheinlichkeitsdichte 82 des periodisch abgelenkten Lichtstrahls 50 in dem bevorzugten Raumwinkel 52 angeordnet ist. Dies kann insbesondere erfolgen wie oben in Bezug auf die Figuren 2 bis 4 beschrieben.

Wie in Bezug auf die Vorrichtung 10 beschrieben, kann das Verfahren als einen optionalen Schritt ein Erzeugen eines Lichtbereitstellungs-Steuersignals 64 basierend auf einer durch das Steuersignal 62 indizierten Lichtintensität in dem bevorzugten Raumwinkel 52 und ein Steuern der Bereitstellungseinrichtung 11 mittels des erzeugten Lichtbereitstellungs-Steuersignals 64 umfassen. Weiterhin kann das Verfahren als einen optionalen Schritt ein Erzeugen oder ein Anpassen des Stellsignals 60 basierend auf einer durch das Steuersignal 62 indizierten Halbwertsbreite b für einen Peak der Aufenthaltswahrscheinlichkeitsdichte 82 des Lichtstrahls 50 um das Maximum 81 umfassen.

**Patentansprüche**

1. Vorrichtung (10) zum Ablenken eines Lichtstrahls (50) zum Scannen eines Raumwinkelbereichs (51) mit:

   einer Bereitstellungseinrichtung (11), welche dazu ausgelegt ist, einen Lichtstrahl (50) bereitzustellen und auf eine Ablenkeinrichtung (12) der Vorrichtung (10) zu lenken;
   wobei die Ablenkeinrichtung (12) einen verstellbaren Mikrospiegel (14) aufweist und dazu ausgelegt ist, den Lichtstrahl (50) nach Maßgabe eines Stellsignals (60) zum periodischen Scannen eines Raumwinkelbereichs (51) mittels des Mikrospiegels (14) periodisch abzulenken;
   einer Steuereinrichtung (16), welche dazu ausgelegt ist, ein Steuersignal (62) zu empfangen, welches einen aktuell bevorzugten Raumwinkel (52) in dem zu scannenden Raumwinkelbereich (51) indiziert; und basierend auf dem empfangenen Steuersignal (62) das Stellsignal (60) zu erzeugen;
   wobei der aktuell bevorzugte Raumwinkel (52) ein Raumwinkel ist, in welchen im Verlauf einer Periode des periodischen Scannens der größte Anteil der verfügbaren Lichtleistung abgelenkt werden soll; und
   wobei die Steuereinrichtung (16) dazu ausgelegt ist, das Stellsignal (60) derart zu erzeugen, dass ein Maximum (81) einer Aufenthaltswahrscheinlichkeitsdichte (82) des periodisch abgelenkten Lichtstrahls (50) in dem bevorzugten Raumwinkel (52) angeordnet ist;
   **dadurch gekennzeichnet, dass**
   die Steuereinrichtung (16) dazu ausgelegt ist, das Stellsignal (60) derart zu erzeugen, dass eine Winkelgeschwindigkeitsfunktion (84; 184) des Mikrospiegels (14), welche eine Winkelgeschwindigkeit des Mikrospiegels (14) als Funktion einer Zeit innerhalb einer Periode des periodischen Scannens angibt, in mindestens einem ersten Abschnitt (71; 171) ihres periodischen Definitionsbereichs (75; 175) einen ersten in der Zeit konstanten Term und einen ersten in der Zeit periodischen Term aufweist oder daraus besteht.

2. Vorrichtung (10) nach Anspruch 1,

   wobei die Steuereinrichtung (16) dazu ausgelegt ist, das Stellsignal (60) derart zu erzeugen, dass die Winkelgeschwindigkeitsfunktion (84; 184) des Mikrospiegels (14) weiterhin in einem zweiten Abschnitt (72; 172) ihres periodischen Definitionsbereichs (75; 175) einen zweiten in der Zeit konstanten Term und einen zweiten in der Zeit periodischen Term aufweist oder daraus besteht; und/oder
   wobei der erste in der Zeit konstante Term sich von dem zweiten in der Zeit konstanten Term unterscheidet und wobei der erste in der Zeit periodische Term sich von dem zweiten in der Zeit periodischen Term unterscheidet.

3. Vorrichtung (10) nach Anspruch 2,
   wobei die Winkelgeschwindigkeitsfunktion (84; 184) in dem ersten Abschnitt (71; 171) gleich der mit minus Eins multiplizierten Winkelgeschwindigkeitsfunktion (84; 184) in dem zweiten Abschnitt (72; 172) ist, wenn das Argument der Winkelgeschwindigkeitsfunktion (84; 184) in dem ersten Abschnitt (71; 171) mit minus Eins multipliziert wird.

4. Vorrichtung (10) nach Anspruch 2 oder Anspruch 3,

   wobei an einem ersten Übergang zwischen dem ersten Abschnitt (171) und dem zweiten Abschnitt (172) des periodischen Definitionsbereichs (175) der Winkelgeschwindigkeitsfunktion (184) ein dritter Abschnitt (173) des periodischen Definitionsbereichs (175) definiert ist; und
   wobei an einem zweiten Übergang zwischen dem zweiten Abschnitt (172) und dem ersten Abschnitt (171) des periodischen Definitionsbereichs (175) ein vierter Abschnitt (174) des periodischen Definitionsbereichs (175) definiert ist;
   wobei die Winkelgeschwindigkeitsfunktion (184) des Mikrospiegels (14) in dem dritten Abschnitt (173) eine stetige Funktion ist; und/oder
   wobei die Winkelgeschwindigkeitsfunktion (184) des Mikrospiegels (14) in dem vierten Abschnitt (174) eine stetige Funktion ist.

5. Vorrichtung (10) nach Anspruch 4,
   wobei die Winkelgeschwindigkeitsfunktion (184) in dem dritten Abschnitt (173) einmal den Wert Null annimmt und/oder wobei die Winkelgeschwindigkeitsfunktion (184) in dem vierten Abschnitt (174) einmal den Wert Null annimmt.

6. Vorrichtung (10) nach einem der Ansprüche 1 bis 5,

wobei das Steuersignal (62) weiterhin eine Halbwertsbreite (b) eines Peaks der Aufenthaltswahrscheinlichkeitsdichte (82) des periodisch abgelenkten Lichtstrahls (50) um das in dem bevorzugten Raumwinkel (52) angeordnete Maximum (81) indiziert; und
wobei die Steuereinrichtung (16) dazu ausgelegt ist, das Stellsignal (60) zum Ausbilden des Peaks der Aufenthaltswahrscheinlichkeitsdichte (82) mit der durch das Steuersignal (62) indizierten Halbwertsbreite (b) anzupassen.

7. Vorrichtung (10) nach einem der Ansprüche 1 bis 6,

wobei die Bereitstellungseinrichtung (11) zum Erzeugen des Lichtstrahls (50) nach Maßgabe eines Lichtbereitstellungs-Steuersignals (64) ausgelegt ist;
wobei das Steuersignal (62) weiterhin eine gewünschte Lichtintensität des Lichtstrahls (50) in dem bevorzugten Raumwinkel (52) indiziert; und
wobei die Steuereinrichtung (16) dazu ausgelegt ist, das Lichtbereitstellungs-Steuersignal (64) basierend auf der durch das Steuersignal (62) indizierten Lichtintensität zu erzeugen.

8. Vorrichtung (10) nach einem der Ansprüche 1 bis 7,
wobei die Steuereinrichtung (16) dazu ausgelegt ist, das Stellsignal (60) derart zu erzeugen, dass der Mikrospiegel (14) zum Ablenken des Lichtstrahls (50) über Grenzen des zu scannenden Raumwinkelbereichs (51) hinweg ausgelenkt wird.

9. Verfahren zum Ablenken eines Lichtstrahls (50) zum Scannen eines Raumwinkelbereichs (51) mit den Schritten:

Periodisches Ablenken (S02) eines Lichtstrahls (50) nach Maßgabe eines Stellsignals (60) zum periodischen Scannen eines Raumwinkelbereichs (51);
durch die Schritte:

Empfangen (S03) eines Steuersignals (62), welches einen aktuell bevorzugten Raumwinkel (52) in dem zu scannenden Raumwinkelbereich (51) indiziert;
wobei der aktuell bevorzugte Raumwinkel (52) ein Raumwinkel ist, in welchen im Verlauf einer Periode des periodischen Scannens der größte Anteil der verfügbaren Lichtleistung abgelenkt werden soll; und
Erzeugen (S04) des Stellsignals (60) basierend auf dem empfangenen Steuersignal (62) derart, dass ein Maximum (81) einer Aufenthaltswahrscheinlichkeitsdichte (82) des abgelenkten Lichtstrahls (50) in dem bevorzugten Raumwinkel (52) angeordnet ist;
**dadurch gekennzeichnet, dass**
das Stellsignal (60) derart erzeugt wird, dass eine Winkelgeschwindigkeitsfunktion (84; 184) des Mikrospiegels (14), welche eine Winkelgeschwindigkeit des Mikrospiegels (14) als Funktion einer Zeit innerhalb einer Periode des periodischen Scannens angibt, in mindestens einem ersten Abschnitt (71; 171) ihres periodischen Definitionsbereichs (75; 175) einen ersten in der Zeit konstanten Term und einen ersten in der Zeit periodischen Term aufweist oder daraus besteht.

**Claims**

1. Apparatus (10) for redirecting a light beam (50) for scanning a solid angle region (51), comprising:

a provision device (11), which is configured to provide a light beam (50) and steer it onto a redirection device (12) of the apparatus (10);
wherein the redirection device (12) has an adjustable micromirror (14) and is configured to periodically redirect the light beam (50) in accordance with an actuation signal (60) for periodically scanning a solid angle region (51) by means of the micromirror (14) ;
a control device (16), which is configured to receive a control signal (62) indicating a currently preferred solid angle (52) in the solid angle region (51) to be scanned; and to generate the actuation signal (60) on the basis of the received control signal (62);

wherein the currently preferred solid angle (52) is a solid angle at which, in the course of one period of the periodic scanning, the greatest proportion of the available light power is intended to be redirected; and

wherein the control device (16) is configured to generate the actuation signal (60) in a manner such that a maximum (81) of a residence time probability density (82) of the periodically redirected light beam (50) is arranged in the preferred solid angle (52);

**characterized in that**

the control device (16) is configured to generate the actuation signal (60) in a manner such that an angular speed function (84; 184) of the micromirror (14), indicating an angular speed of the micromirror (14) as a function of time within one period of the periodic scanning, in at least one first section (71; 171) of its periodic definition region (75; 175) has, or consists of, a first term that is constant over time and a first term that is periodic over time.

2. Apparatus (10) according to Claim 1,

wherein the control device (16) is configured to generate the actuation signal (60) in a manner such that the angular speed function (84; 184) of the micromirror (14) furthermore in a second section (72; 172) of its periodic definition region (75; 175) has, or consists of, a second term that is constant over time and a second term that is periodic over time; and/or

wherein the first term that is constant over time differs from the second term that is constant over time and wherein the first term that is periodic over time differs from the second term that is periodic over time.

3. Apparatus (10) according to Claim 2,
wherein the angular speed function (84; 184) in the first section (71; 171) is equal to the angular speed function (84; 184) in the second section (72; 172) multiplied by minus one if the argument of the angular speed function (84; 184) in the first section (71; 171) is multiplied by minus one.

4. Apparatus (10) according to Claim 2 or Claim 3,

wherein a third section (173) of the periodic definition region (175) is defined at a first transition between the first section (171) and the second section (172) of the periodic definition region (175) of the angular speed function (184); and

wherein a fourth section (174) of the periodic definition region (175) is defined at a second transition between the second section (172) and the first section (171) of the periodic definition region (175);

wherein the angular speed function (184) of the micromirror (14) in the third section (173) is a continuous function; and/or

wherein the angular speed function (184) of the micromirror (14) in the fourth section (174) is a continuous function.

5. Apparatus (10) according to Claim 4,
wherein the angular speed function (184) in the third section (173) adopts once the value zero and/or wherein the angular speed function (184) in the fourth section (174) adopts once the value zero.

6. Apparatus (10) according to any of Claims 1 to 5,

wherein the control signal (62) furthermore indicates a full width at half maximum (b) of a peak of the residence time probability density (82) of the periodically redirected light beam (50) around the maximum (81) arranged in the preferred solid angle (52); and

wherein the control device (16) is configured to adapt the actuation signal (60) for forming the peak of the residence time probability density (82) with the full width at half maximum (b) indicated by the control signal (62).

7. Apparatus (10) according to any of Claims 1 to 6,

wherein the provision device (11) is configured to generate the light beam (50) in accordance with a light provision control signal (64);

wherein the control signal (62) furthermore indicates a desired light intensity of the light beam (50) in the preferred solid angle (52); and

wherein the control device (16) is configured to generate the light provision control signal (64) on the basis of the light intensity indicated by the control signal (62).

8. Apparatus (10) according to any of Claims 1 to 7,
   wherein the control device (16) is configured to generate the actuation signal (60) in a manner such that the micromirror (14) is deflected to redirect the light beam (50) beyond boundaries of the solid angle region (51) to be scanned.

9. Method for redirecting a light beam (50) for scanning a solid angle region (51), comprising the steps of:

   periodically redirecting (S02) a light beam (50) in accordance with an actuation signal (60) for periodically scanning a solid angle region (51);
   using the steps of:

   receiving (S03) a control signal (62) indicating a currently preferred solid angle (52) in the solid angle region (51) to be scanned;
   wherein the currently preferred solid angle (52) is a solid angle at which, in the course of one period of the periodic scanning, the greatest proportion of the available light power is intended to be redirected; and
   generating (S04) the actuation signal (60) on the basis of the received control signal (62) in a manner such that a maximum (81) of a residence time probability density (82) of the redirected light beam (50) is arranged in the preferred solid angle (52);
   **characterized in that**
   the actuation signal (60) is generated in a manner such that an angular speed function (84; 184) of the micromirror (14), indicating an angular speed of the micromirror (14) as a function of time within one period of the periodic scanning, in at least one first section (71; 171) of its periodic definition region (75; 175) has, or consists of, a first term that is constant over time and a first term that is periodic over time.

**Revendications**

1. Dispositif (10) permettant de dévier un faisceau lumineux (50) pour balayer une zone d'angle solide (51), comprenant :

   un moyen de fourniture (11) qui est conçu pour fournir un faisceau lumineux (50) et pour le diriger sur un moyen de déviation (12) du dispositif (10) ;
   dans lequel le moyen de déviation (12) présente un micromiroir réglable (14) et est conçu pour dévier périodiquement le faisceau lumineux (50) conformément à un signal de réglage (60) pour le balayage périodique d'une zone d'angle solide (51) au moyen du micromiroir (14) ;
   un moyen de commande (16) qui est conçu pour recevoir un signal de commande (62) qui indique un angle solide (52) actuellement préféré dans la zone d'angle solide (51) à balayer ; et pour générer le signal de réglage (60) sur la base du signal de commande (62) reçu ;
   dans lequel l'angle solide (52) actuellement préféré est un angle solide dans lequel la plus grande partie de la puissance lumineuse disponible est à dévier au cours d'une période du balayage périodique ; et
   dans lequel le moyen de commande (16) est conçu pour générer le signal de réglage (60) de telle sorte qu'un maximum (81) d'une densité de probabilité de présence (82) du faisceau lumineux (50) dévié périodiquement est disposé dans l'angle solide (52) préféré ;
   **caractérisé en ce que** le moyen de commande (16) est conçu pour générer le signal de réglage (60) de telle sorte qu'une fonction de vitesse angulaire (84 ; 184) du micromiroir (14), qui indique une vitesse angulaire du micromiroir (14) en fonction du temps à l'intérieur d'une période du balayage périodique, présente dans au moins une première partie (71 ; 171) de sa zone de définition périodique (75 ; 175) un premier terme constant dans le temps et un premier terme périodique dans le temps, ou est composée de ceux-ci.

2. Dispositif (10) selon la revendication 1,

   dans lequel le moyen de commande (16) est conçu pour générer le signal de réglage (60) de telle sorte que la fonction de vitesse angulaire (84 ; 184) du micromiroir (14) continue à présenter dans une deuxième partie (72 ; 172) de sa zone de définition périodique (75 ; 175) un deuxième terme constant dans le temps et un deuxième terme périodique dans le temps, ou à être composée de ceux-ci ; et/ou
   dans lequel le premier terme constant dans le temps est différent du deuxième terme constant dans le temps, et dans lequel le premier terme périodique dans le temps est différent du deuxième terme périodique dans le temps.

3. Dispositif (10) selon la revendication 2, dans lequel la fonction de vitesse angulaire (84 ; 184) est dans la première partie (71 ; 171) égale à la fonction de vitesse angulaire (84 ; 184) multipliée par moins un dans la deuxième partie (72 ; 172) si l'argument de la fonction de vitesse angulaire (84 ; 184) dans la première partie (71 ; 171) est multiplié par moins un.

4.  Dispositif (10) selon la revendication 2 ou la revendication 3,

    dans lequel une troisième partie (173) de la zone de définition périodique (175) est définie au niveau d'une première transition entre la première partie (171) et la deuxième partie (172) de la zone de définition périodique (175) de la fonction de vitesse angulaire (184) ; et
    dans lequel une quatrième partie (174) de la zone de définition périodique (175) est définie au niveau d'une deuxième transition entre la deuxième partie (172) et la première partie (171) de la zone de définition périodique (175) ;
    dans lequel la fonction de vitesse angulaire (184) du micromiroir (14) est une fonction continue dans la troisième partie (173) ; et/ou
    dans lequel la fonction de vitesse angulaire (184) du micromiroir (14) est une fonction continue dans la quatrième partie (174).

5.  Dispositif (10) selon la revendication 4, dans lequel la fonction de vitesse angulaire (184) prend une fois la valeur zéro dans la troisième partie (173), et/ou dans lequel la fonction de vitesse angulaire (184) prend une fois la valeur zéro dans la quatrième partie (174).

6.  Dispositif (10) selon l'une quelconque des revendications 1 à 5,

    dans lequel le signal de commande (62) indique en outre une largeur à mi-hauteur (b) d'un pic de la densité de probabilité de présence (82) du faisceau lumineux (50) dévié périodiquement du maximum (81) disposé dans l'angle solide (52) préféré ; et
    dans lequel le moyen de commande (16) est conçu pour adapter le signal de réglage (60) pour réaliser le pic de la densité de probabilité de présence (82) avec la largeur à mi-hauteur (b) indiquée par le signal de commande (62).

7.  Dispositif (10) selon l'une quelconque des revendications 1 à 6,

    dans lequel le moyen de fourniture (11) permettant générer le faisceau lumineux (50) est conçu conformément à un signal de commande de fourniture de lumière (64) ;
    dans lequel le signal de commande (62) indique en outre une intensité de lumière souhaitée du faisceau lumineux (50) dans l'angle solide préféré (52) ; et
    dans lequel le moyen de commande (16) est conçu pour générer le signal de commande de fourniture de lumière (64) sur la base de l'intensité de lumière indiquée par le signal de commande (62).

8.  Dispositif (10) selon l'une quelconque des revendications 1 à 7, dans lequel le moyen de commande (16) est conçu pour générer le signal de réglage (60) de telle sorte que pour dévier le faisceau lumineux (50), le micromiroir (14) est dévié au-delà des limites de la zone d'angle solide (51) à balayer.

9.  Procédé permettant de dévier un faisceau lumineux (50) pour balayer une zone d'angle solide (51), comprenant les étapes consistant à :

    dévier périodiquement (S02) un faisceau lumineux (50) conformément à un signal de réglage (60) pour le balayage périodique d'une zone d'angle solide (51) ;
    par les étapes consistant à :

       recevoir (S03) un signal de commande (62) qui indique un angle solide (52) actuellement préféré dans la zone d'angle solide (51) à balayer ;
       dans lequel l'angle solide (52) actuellement préféré est un angle solide dans lequel la plus grande partie de la puissance lumineuse disponible est à dévier au cours d'une période du balayage périodique ; et
       générer (S04) le signal de réglage (60) sur la base du signal de commande (62) reçu de telle sorte qu'un maximum (81) d'une densité de probabilité de présence (82) du faisceau lumineux (50) dévié est disposé dans l'angle solide (52) préféré ;
       **caractérisé en ce que** le signal de réglage (60) est généré de telle sorte qu'une fonction de vitesse angulaire (84 ; 184) du micromiroir (14), qui indique une vitesse angulaire du micromiroir (14) en fonction du temps à l'intérieur d'une période du balayage périodique, présente dans au moins une première partie (71 ; 171) de sa zone de définition périodique (75 ; 175) un premier terme constant dans le temps et un premier terme périodique dans le temps, ou est composé de ceux-ci.

Fig. 1

Fig. 2

Fig. 3

Fig. 4

S01

S02

S03

S04

**Fig. 5**

1

2

3

7

9

4

5

6

8

**Fig. 6**

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2010079836 A1
- US 5187364 A
- DE 19812768 A1
- US 2014159620 A1
- US 6147822 A
- DE 19710714 C1